(19) Europäisches Patentamt

European Patent Office

Office européen des brevets

(11) Veröffentlichungsnummer: **0 232 476 B1**

# EUROPÄISCHE PATENTSCHRIFT

(12)

(45) Veröffentlichungstag der Patentschrift: **05.08.92**

(51) Int. Cl.⁵: **G02C 5/16**

(21) Anmeldenummer: **86115637.0**

(22) Anmeldetag: **11.11.86**

(54) **Bügelendstück für einen Bügel einer Brillenfassung.**

(30) Priorität: **12.02.86 DE 3604357**

(43) Veröffentlichungstag der Anmeldung:
**19.08.87 Patentblatt 87/34**

(45) Bekanntmachung des Hinweises auf die
Patenterteilung:
**05.08.92 Patentblatt 92/32**

(84) Benannte Vertragsstaaten:
**AT BE CH DE ES FR GB GR IT LI LU NL SE**

(56) Entgegenhaltungen:
**EP-A- 0 170 721      EP-A- 0 187 184
US-A- 460 576        US-A- 1 625 050
US-A- 2 064 604      US-A- 4 012 130
US-A- 4 389 102**

(73) Patentinhaber: **EYEMETRICS-SYSTEMS AG
Steinbockstrasse 4
CH-7001 Chur(CH)**

(72) Erfinder: **EYEMETRICS-SYSTEMS AG
Steinbockstrasse 4
CH-7001 Chur(CH)**

(74) Vertreter: **Grams, Klaus Dieter, Dipl.-Ing. et al
Patentanwaltsbüro Tiedtke-Bühling-Kinne-
Grupe-Pellmann-Grams-Struif Winter-Roth
Bavariaring 4
W-8000 München 2(DE)**

## Beschreibung

Die Erfindung bezieht sich auf ein Bügelendstück für einen Bügel einer Brillenfassung gemäß dem Oberbegriff von Patentanspruch 1.

Ein solches Bügelendstück ist bekannt (US-PS 46 05 76). Bei diesem bekannten Bügelendstück sind die unteren Enden des Verbindungsabschnitts und des Anlageabschnitts entweder durch Löten miteinander verbunden oder durch einen stark gekrümmten Drahtabschnitt, der einerseits in den Anlageabschnitt und andererseits in den Verbindungsabschnitt übergeht. Die Kopplung des oberen Endes des Anlageabschnitts mit dem ersten Abschnitt besteht im bekannten Fall aus einer Öse am oberen Ende des Anlageabschnitts, durch die der erste Abschnitt verläuft. Die federnde Auslenkbarkeit des Anlageabschnitts ist dadurch gegeben, daß der Anlageabschnitt selber als elastische Drahtfeder ausgebildet ist, die unter Belastung nachgibt und nach hinten, d.h. in Richtung zum Verbindungsabschnitt ausweicht. Die federnde Nachgiebigkeit des Anlageabschnitts soll bei dem bekannten Bügelendstück dafür sorgen, daß sich der Anlageabschnitt dem ihm zugeordneten Kontaktbereich am Ohr und/oder am Schädel des Brillenträgers gut anpaßt, damit bequemer Brillensitz erreicht wird. Nachteilig bei diesem bekannten Bügelendstück ist, daß dann, wenn zur Erzielung einer hinreichenden Formsteifigkeit des Bügelendstücks größere Querschnitte für den Anlageabschnitt und auch den Verbindungsabschnitt gewählt werden, die Federeigenschaften schlechter werden. Wenn dagegen zur Erzielung einer hinreichend großen federnden Nachgiebigkeit kleine Querschnitte gewählt werden, sinkt die Formstabilität des Bügelendstücks. Darüber hinaus führen kleine Querschnitte des Anlageabschnitts dazu, daß dieser sich in den ihm zugeordneten Kontaktbereich einschneiden kann und dadurch Unbequemlichkeiten verursacht.

Bei einem aufgrund der deutschen Patentanmeldung P 34 29 091.5 zum Stand der Technik gehörenden Bügelendstück, das die Merkmale des Oberbegriffs von Patentanspruch 1 mit Ausnahme der Kopplung des oberen Endes des Anlageabschnitts mit dem ersten Abschnitt aufweist, ist vorgesehen, das Auslenkverhalten des Anlageabschnitts unter Last und den Tragekomfort dadurch zu verbessern, daß die Verbindung zwischen dem Verbindungsabschnitt und dem Anlageabschnitt federelastisch ausgebildet ist, so daß der Anlageabschnitt als Ganzes um diese Verbindung gegen einen elastischen Widerstand schwenken kann, der von der Verbindung ausgeübt wird. Da diese Verbindung sowohl den Anlageabschnitt trägt, als auch für dessen Auslenkbarkeit sorgt und schließlich auch die elastische Rückstellkraft für den Anlageim Falle einer Auslenkung liefert, muß sie unter Berücksichtigung aller drei vorstehend genannten Funktionen ausgebildet sein.

Der Erfindung liegt die Aufgabe zugrunde, das gattungsgemäße Bügelendstück derart auszubilden, daß bei hinreichender Formstabilität der Elemente des Bügelendstücks zugleich für elastische Auslenkbarkeit des Anlageabschnitts schon durch verhältnismäßig geringe Kräfte gesorgt ist.

Diese Aufgabe wird erfindungsgemäß durch die Merkmale im kennzeichnenden Teil von Patentanspruch 1 gelöst. Bei dem erfindungsgemäßen Bügelendstück ist die Verbindung zwischen dem Anlageabschnitt und dem Verbindungsabschnitt als widerstandsarmes Gelenk ausgebildet, das allein die Funktion hat, den Anlageabschnitt nahe seinem unteren Ende abzustützen und dessen Bewegbarkeit zu gewährleisten. Für den elastischen Widerstand, der der Auslenkbewegung des Anlageabschnitts entgegenwirken soll, sorgt das federelastische Element, das zwischen dem oberen Ende des Anlageabschnitts und dem ersten Abschnitt wirkt. Der Anlageabschnitt selber braucht somit weder in sich verformbar zu sein, noch federelastische Eigenschaften zu haben, da die Bewegbarkeit vom Gelenk gewährleistet und die Federkraft vom federelastischen Element geliefert wird. Allerdings soll nicht ausgeschlossen sein, daß der Anlageabschnitt zusätzlich eine gewisse Verformbarkeit und Elastizität aufweist. Ferner ist für die Erfindung wesentlich, daß die Funktionen "Auslenkbarkeit des Anlageabschnitts" und "Erzeugen einer elastischen Rückstellkraft" nicht von ein und demselben Bauteil des Bügelendstücks erfüllt zu werden brauchen, sondern voneinander entkoppelt sind, so daß sowohl das Gelenk als auch das federelastische Element jeweils optimal unter Berücksichtigung der von ihm zu erfüllenden Funktion ausgebildet werden kann.

Vorteilhafte Ausgestaltungen der Erfindung ergeben sich aus den Unteransprüchen sowie der folgenden Beschreibung von Ausführungsbeispielen unter Bezugnahme auf die Zeichnungen. Es zeigen:

Fig. 1   eine Seitenansicht einer ersten Ausführungsform eines Bügelendstücks;

Fig. 2   eine vergrößerte Schnittdarstellung eines Ausschnitts des Bügelendstücks gemäß Fig. 1;

Fig. 3   eine Schnittdarstellung gemäß A-B in Fig. 1;

Fig. 4   eine Schnittdarstellung gemäß C-D in Fig 2;

Fig. 5   eine Fig. 2 ähnliche Schnittdarstellung einer zweiten Ausführungsform;

Fig. 6   eine Fig. 2 ähnliche Schnittdarstellung einer dritten Ausführungsform;

Fig. 7   eine Schnittdarstellung gemäß E-F in Fig. 6;

Fig. 8 eine Fig. 1 ähnliche Ansicht eines Bügelendstücks gemäß einer vierten Ausführungsform;

Fig. 9 eine vergrößerte Ansicht, teilweise im Schnitt, eines Bereichs des Bügelendstücks gemäß Fig. 8;

Fig. 10 eine ausschnittsweise Ansicht gemäß X in Fig. 9;

Fig. 11 eine ausschnittsweise Darstellung einer fünften Ausführungsform des Bügelendstücks;

Fig. 12 einen Fig. 2 ähnlichen Schnitt durch ein Ausführungsbeispiel gemäß einer sechsten Ausführungsform.

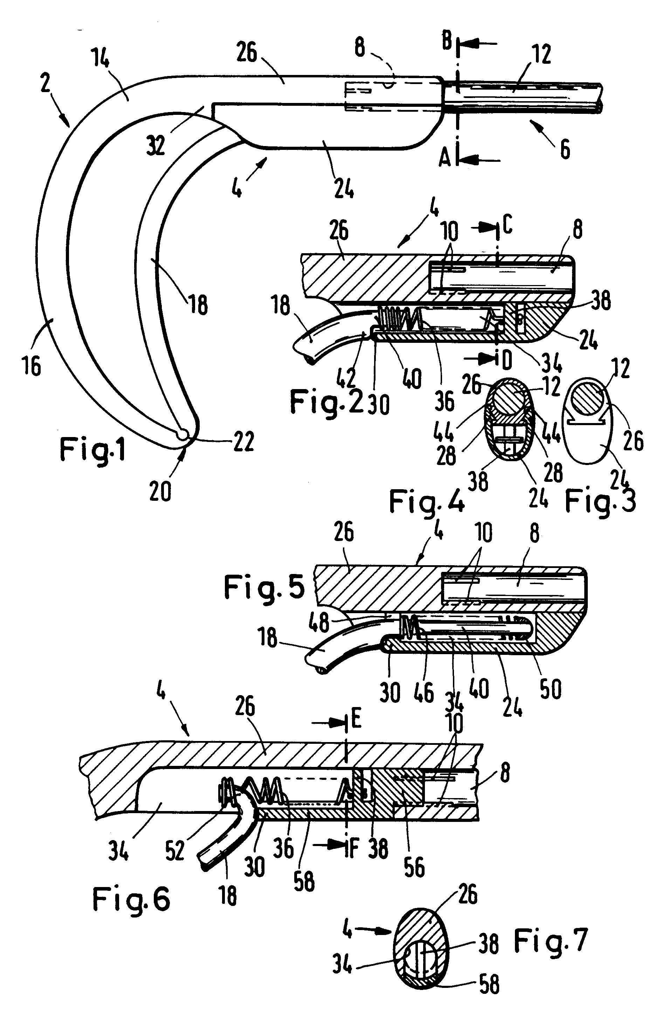

Fig. 1 zeigt eine Seitenansicht eines Bügelendstücks 2 gemäß einer ersten Ausführungsform. Dieses Bügelendstück weist einen länglichen, im wesentlichen geraden ersten Abschnitt 4 auf, der an seinem vorderen, in Fig. 1 rechten Ende verbunden ist mit einem nur teilweise dargestellten Bügelschaft 6 für einen Brillenbügel. Im ersten Abschnitt 4 des Bügelendstücks 2 ist eine zylindrische Bohrung 8 ausgebildet, nahe deren Boden Leisten 10 ausgebildet sind, die in Richtung der Bohrungsachse verlaufen und radial nach innen vorstehen. Das Bügelende des Bügelschaftes 6 ist als zylindrischer Zapfen 12 mit einer umlaufenden Rillung ausgebildet. Der Zapfen 12 ist bei montiertem Bügel in die Bohrung 8 eingesteckt, wobei dann die Leisten 10 in die Oberfläche des Zapfens 12 bzw. von dessen Rillung eingedrückt sind.

Obwohl bei dem hier erläuterten Ausführungsbeispiel das Bügelendstück 2 und der Bügelschaft 6 zunächst getrennt gefertigt und dann mittels der erläuterten Steckverbindung miteinander verbunden werden, ist die Erfindung nicht auf einen solchen Anwendungsfall beschränkt. Vielmehr kann das Bügelendstück auch einstückig mit dem Bügelschaft ausgebildet oder auf andere Weise, als vorstehend beschrieben, mit diesem verbunden sein.

An seinem hinteren, in Fig. 1 linken Ende geht der erste Abschnitt 4 über einen Übergangsbereich 14 in einen Verbindungsabschnitt 16 über, der im wesentlichen nach unten bezüglich des ersten Abschnitts 4 verläuft. Der Verbindungsabschnitt 16 verjüngt sich von oben nach unten etwas und ist bogenförmig gekrümmt, wobei die Innenseite der Krümmung nach vorne, d.h. nach rechts in Fig. 1 weist. Der erste Abschnitt 4, der ebenfalls bogenförmig gekrümmte Übergangsbereich 14 und der Verbindungsabschnitt 16 sind einstückig ausgebildet, und zwar vorzugsweise aus einem geeigneten Kunststoff, beispielsweise aus einem Polyätherimid.

Vor dem Verbindungsabschnitt 16, d.h. rechts von diesem in Fig. 1, ist ein Anlageabschnitt 18 angeordnet, der an seinem unteren Ende mit dem unteren Ende des Verbindungsabschnitts 16 verbunden ist und der an seinem oberen Ende auf noch näher zu beschreibende Weise mit dem ersten Abschnitt 4 gekoppelt ist. Der Anlageabschnitt 18 ist im wesentlichen sichelförmig gekrümmt, wobei die Innenseite der Krümmung nach vorne, d.h. nach rechts in Fig. 1, weist. Der Anlageabschnitt dient dazu, in Anlage am Ohr und/oder am Kopf des Brillenträgers zu treten und dort die Brille abzustützen, wobei dies auf für den Brillenträger möglichst bequeme Weise erfolgen soll, d.h. unter Vermeidung von Druckspitzen. Der Anlageabschnitt 18 hat ein kreisförmiges oder ovales Profil und ist so dick ausgebildet, daß er einerseits die erforderliche Formsteifigkeit hat, d.h sich unter den üblichen Belastungen nicht wesentlich verformt, und daß er in möglichst großflächigem Kontakt mit dem Ohr und/oder dem Schädel steht, damit dem Einschneiden des Anlageabschnitts in die Haut vorgebeugt ist. Durch die gewisse Formsteifigkeit ist jedoch nicht ausgeschlossen, daß sich der Anlageabschnitt in gewissem Ausmaß unter den bei normalem Gebrauch einer Brille auftretenden Belastungen verformt und dem Kontaktbereich am Ohr und/oder dem Kopf anschmiegt.

Bei dem in den Fig. 1 bis 4 dargestellten ersten Ausführungsbeispiel besteht die Verbindung zwischen den unteren Enden des Anlageabschnitts 18 und des Verbindungsabschnitts 16 aus einem widerstandsarmen Gelenk 20 in Form eines dünnen, streifenförmigen Kunststoffabschnitts 22. Dieser Kunststoffabschnitt 22 und der Verbindungsabschnitt 16 sowie der Anlageabschnitt 18 sind beim dargestellten Ausführungsbeispiel einstückig ausgebildet. Die größte Breite des Kunststoffabschnitts 22 verläuft senkrecht zur Zeichenebene von Fig. 1. Dadurch weist das Gelenk 20 eine gewisse Quersteifigkeit senkrecht zur Zeichenebene von Fig. 1 auf; es ist jedoch äußerst weich bzw. widerstandsarm in der Zeichenebene von Fig. 1, so daß der Anlageabschnitt 18 im Gelenk 20 geschwenkt werden kann, wobei diese Schwenk- bzw. Auslenkbewegung keinerlei Verformung des Anlageabschnitts 18 selber voraussetzt. Das Gelenk 20 stützt den Anlageabschnitt 18 und gewährleistet seine Bewegbarkeit; vom Gelenk 20 wird jedoch im wesentlichen keine Widerstandskraft gegen eine Auslenkung des Anlageabschnitts 18 auf letzteren ausgeübt.

Wie die Fig. 1 bis 4 erkennen lassen, gehört zum ersten Abschnitt 4 eine längliche Kappe 24, die von unten an den Körper 26 des ersten Abschnitts 4 angesetzt ist. Wie Fig. 4 erkennen läßt, hat die Kappe 24 im wesentlichen ein oben offenes, U-förmiges Profil. Ausserdem ist die Kappe an ihrem hinteren, in Fig. 2 linken Ende offen; dagegen ist sie an ihrem vorderen, in Fig. 2 rechten Ende geschlossen, wie auch Fig. 3 erkennen läßt. An den oberen Rändern der Kappe 24 ist jeweils ein nach innen weisender Vorsprung 28 ausgebildet, der in eine entsprechend geformte Nut am Körper 26 eingreift. Der Boden der Kappe 24 bildet an seinem hinteren Ende einen Anschlag 30. Am Körper 26 wiederum ist ein weiterer Anschlag 32 ausgebildet, an dem die Kappe 24 anliegt und der eine Verschiebung der Kappe 24 nach links in Fig. 1 verhindert.

Der Körper 26 und die Kappe 24 begrenzen gemeinsam eine Kammer bzw. einen Hohlraum 34, der in Längsrichtung des ersten Abschnitts 4 und unterhalb der Bohrung 8 verläuft. In diesem Hohlraum 34 ist ein federelastisches Element in Form einer Schrauben-Zugfeder 36 angeordnet, die mit ihrem vorderen Ende an einem Zapfen 38 aufgehängt ist, der einstückig mit der Kappe 24 ausgebildet ist. An ihrem hinteren Ende ist die Schrauben-Zugfeder 36 fest mit dem oberen Ende des Anlageabschnitts 18 verbunden, und zwar dadurch, daß sie auf einen kurzen Dorn 40 geklemmt ist, der am oberen Ende des Anlageabschnitts 18 angeformt ist. Unterhalb des Dorns 40 weist der Anlageabschnitt 18 eine Schulter 42 auf, die in Anlage am Anschlag 30 treten kann.

Das Bügelendstück gemäß dem vorstehend beschriebenen ersten Ausführungsbeispiel wird in der Weise montiert, daß zunächst die Schrauben-Zugfeder 36 auf den Dorn 40 gesteckt wird, daß danach das vordere Ende der Schrauben-Zugfeder 36 am Zapfen 38 eingehängt wird und daß schließlich die Kappe 24 auf den Körper 26 des ersten Abschnitts 4 aufgeschnappt wird, wozu die Kappe 24 oberhalb ihrer beiden Vorsprünge 28 von innen nach außen divergierende Keilfläche 44 aufweist.

Die Fig. 1 und 2 zeigen das Bügelendstück bei unbelastetem Anlageabschnitt 18 desselben. In diesem Zustand wird der Anlageabschnitt von der Schrauben-Zugfeder 36 mit geringer Kraft nach vorn gezogen, so daß die Schulter 42 am Anschlag 30 anliegt. Bei aufgesetzter Brille kann der Anlageabschnitt 18 im Gelenk 20 im Gegenuhrzeigersinn geschwenkt bzw. verlagert werden. Diese Bewegung erfolgt entgegen der von der Schrauben-Zugfeder 36 ausgeübten Zugkraft, die den Anlageabschnitt 18 in seine Ausgangslage zurückzubringen sucht. Vorspannung und Federkonstante der Schrauben-Zugfeder 36 können allein unter dem Gesichtspunkt festgelegt werden, daß die vom Anlageabschnitt 18 auf das Ohr und/oder den Kopf ausgeübte Reaktionskraft die gewünschte Größe hat.

Im folgenden werden die weiteren Ausführungsformen beschrieben. Dabei sind diejenigen Teile und Elemente, die Teilen und Elementen der ersten Ausführungsform gemäß den Fig. 1 bis 4 entsprechen, mit gleichen Bezugszeichen bezeichnet. Diese bereits erläuterten Teile und Elemente werden nicht erneut beschrieben. Für sie gilt ggf. sinngemäß die vorstehende Erläuterung. Im folgenden wird lediglich auf die Unterschiede bzw. Besonderheiten der weiteren Ausführungsformen eingegangen.

Bei der zweiten Ausführungsform gemäß Fig. 5 ist das federelastische Element als Schrauben-Druckfeder 46 ausgebildet, die sich am hinteren Ende der Kappe 24 an einem vom Boden der Kappe nach oben vorstehenden Vorsprung 48 abstützt. Der Dorn 40 am oberen Ende des Anlageabschnitts 18 ist bis zum vorderen, rechten Ende der Schrauben-Druckfeder 46 verlängert und hat einen so geringen Durchmesser, daß er die Bewegung der Schrauben-Druckfeder nicht behindert. An seinem vorderen, in Fig. 5 rechten Ende ist auf den Dorn 40 ein Ring 50 aufgeklemmt, der als Federsitz dient.

Bei der dritten Ausführungsform gemäß den Fig. 6 und 7 ist der Hohlraum 34 im Körper 26 unmittelbar in Verlängerung der Bohrung 8 ausgebildet. Der Hohlraum 34 ist nach unten offen. Im Hohlraum 34 ist die Schrauben-Zugfeder 36 angeordnet, in deren hinteres, in Fig. 6 linkes Ende ein Haken 52 eingehakt ist, der am oberen Ende des Anlageabschnitts 18 angeformt ist. Dieser Haken kann in Anlage am Anschlag 30 treten, wie dies in Fig. 6 gezeigt ist. Das vordere, in Fig. 6 rechte Ende der Schrauben-Zugfeder 36 ist an dem Zapfen 38 aufgehängt, der beim dritten Ausführungsbeispiel einstückig angeformt ist an einem Einsatz 54, der einen in die Bohrung 8 eingepaßten Zapfen 56 sowie einen Boden 58 aufweist, der den Hohlraum 34 im Bereich der Schrauben Zugfeder unten schließt.

Die dritte Ausführungsform hat gegenüber der ersten und der zweiten Ausführungsform den Vorteil, daß die Bauhöhe des ersten Abschnitts 4 verringert ist, weil der Hohlraum 34 und die Bohrung 8 miteinander fluchten und nicht nebeneinander angeordnet sind.

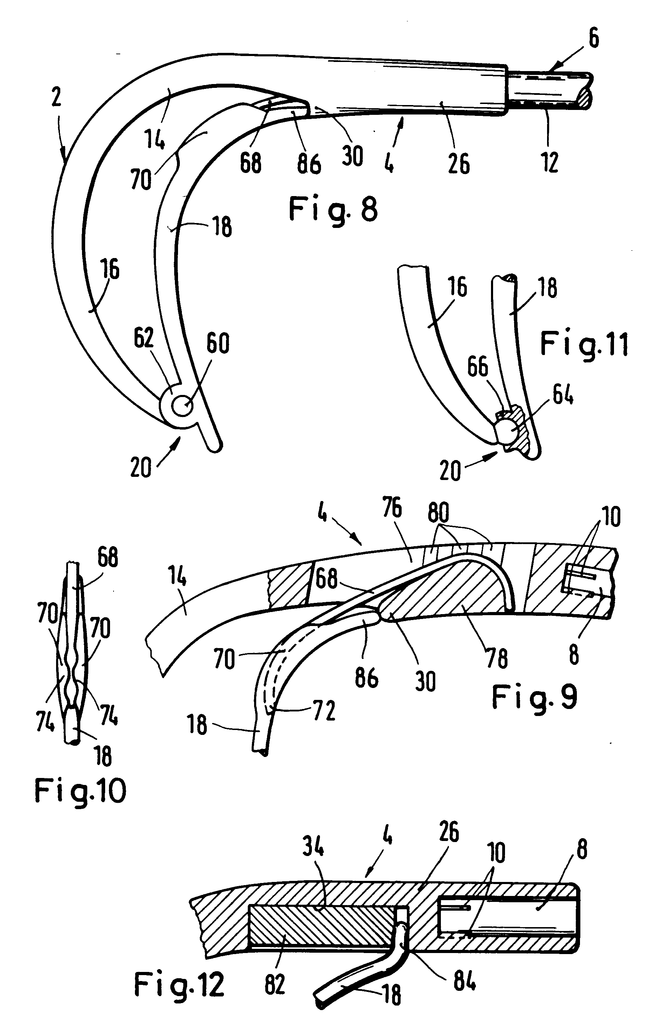

Bei der vierten Ausführungsform gemäß den Fig. 8 bis 10 weist das Gelenk 20 einen Gelenkstift 60 auf, der am Verbindungsabschnitt 16 befestigt ist. Einstückig mit dem Anlageabschnitt 18 ist ein Gelenkauge 62 ausgebildet, das in Eingriff mit dem Gelenkstift 60 steht. Die Achse des Gelenkstiftes 60 verläuft senkrecht zur Zeichenebene von Fig. 8 und somit im wesentlichen senkrecht zu der durch den ersten Abschnitt 4, den Verbindungsabschnitt 16 und den Anlageabschnitt 18 definierten Ebene. Das Gelenk 20 gemäß Fig. 8 setzt einer Schwenkbewegung um die Achse des Gelenkstiftes 60 praktisch keinen Widerstand entgegen; andere Bewegungen dagegen läßt es nicht zu.

Eine weitere Ausbildungsmöglichkeit des Gelenkes 20 zeigt Fig. 11 ausschnittsweise für eine fünfte Ausführungsform. Bei dieser weist das Gelenk 20 eine Kugel 64 auf, die einstückig am Verbindungsabschnitt 16 angeformt ist und eingeschnappt ist in eine Kugelpfanne 66, die am Anlageabschnitt 18 angeformt ist. Das Gelenk 20 gemäß Fig. 11 ermöglicht Auslenkbewegungen des Anlageabschnitts 18 auch in zur Zeichenebene von Fig. 11 senkrechten Richtungen.

Es versteht sich, daß sowohl die Ausbildung des Gelenkes 20 gemäß Fig. 8 als auch die Ausbildung gemäß Fig. 11 in Verbindung mit jedem der hier beschriebenen federelastischen Elementen zur Anwendung kommen kann.

Bei der vierten Ausführungsform gemäß den Fig. 8 bis 10 ist das federelastische Element als gummielastischer Faden 68 ausgebildet, der einerseits am oberen Ende des Anlageabschnitts 18 und andererseits am ersten Abschnitt 4 befestigt ist. Zu diesem Zweck weist das obere Ende des Anlageabschnitts auf seiner Rückseite zwei Klemmbacken 70 auf, die zwischen sich eine Rille begrenzen, in die der Faden 68 eingeklemmt ist. Vom Boden der Rille aus verläuft ein Loch 70 zur Vorderseite des Anlageabschnitts 18, durch das der Faden 68 gesteckt ist. Die einander zugewandten Oberflächen der Klemmbacken 70 sind mit wellenförmigen Vorsprüngen 74 versehen, die die Festhaltung des Fadens 68 verbessern.

Im ersten Abschnitt 4 ist hinter der Bohrung 8 ein Durchbruch 76 ausgebildet, der von oben nach unten durch den ersten Abschnitt 4 verläuft. Im Durchbruch 76 befindet sich eine die beiden gegenüberliegenden Wände des Durchbruchs verbindende Brücke 78 mit einer konvex gekrümmten Oberseite, entlang der der gummielastische Faden 68 verläuft. Oberhalb der Brücke 78 weisen die einander gegenüberliegenden Wände des Durchbruchs 76 wellenförmige Vorsprünge 80 auf, die ähnlich wie die Vorsprünge 74 ausgebildet sind und den Faden 68 klemmend sicher zwischen sich festhalten.

Das obere Ende des Anlageabschnitts 18 läuft in einer Nase 86 aus, die bei unbelastetem Bügelendstück am Anschlag 30 anliegt. Aus diesem unbelasteten Zustand heraus, der in den Fig. 8 und 9 gezeigt ist, kann der Anlageabschnitt im Gegenuhrzeigersinn geschwenkt werden, wobei der gummielastische Faden 68 gedehnt wird und eine entsprechende Feder-Rückstellkraft liefert.

Bei dem sechsten Ausführungsbeispiel gemäß Fig. 12 ist das federelastische Element als länglicher Schaumstoffkörper 82 ausgebildet. Dieser sitzt in dem unten offenen, länglichen Hohlraum 34, der hinter der Bohrung 8 im ersten Abschnitt 4 ausgebildet ist. Am oberen Ende des Anlageabschnitts 18 ist ein im wesentlichen nach oben verlaufender Ansatz 84 angeformt, der in den Hohlraum 34 hineinragt und am vorderen, in Fig. 12 rechten Ende des Schaumstoffkörpers 82 anliegt. Bei einer Schwenkbewegung des Anlageabschnitts 18 im Gegenuhrzeigersinn wird der Schaumstoffkörper 82 zusammengedrückt, so daß er eine Feder-Rückstellkraft auf den Ansatz 84 ausübt.

Obwohl dies in den Zeichnungen nicht dargestellt ist, kann insbesondere der Anlageabschnitt 18, aber auch der Verbindungsabschnitt 16, der erste Abschnitt 4 und der Bügelschaft 6 zusätzlich senkrecht zu den Zeichenebenen der Fig. 1 und 8 gekrümmt sein, um dadurch einen besser der Kopfform angepaßten Verlauf zu haben.

Vorstehend ist die Erfindung anhand von Ausführungsbeispielen erläutert. Es versteht sich jedoch, daß die Erfindung nicht auf die Einzelheiten der beschriebenen Ausführungsformen beschränkt ist.

## Patentansprüche

1. Bügelendstück für einen Bügel einer Brillenfassung mit einem im wesentlichen geraden und in Bügellängsrichtung verlaufenden ersten Abschnitt (14), einem länglichen, bogenförmig gekrümmten Anlageabschnitt (18), der zur Anlage am Kopf hinter dem Ohr bestimmt ist und in der normalen Tragehaltung im wesentlichen nach unten bezuglich des ersten Abschnitts verläuft, so daß die Konkav gekrümmte Fläche des Anlageabschnitts dem Ohr zugewandt ist, und einem Verbindungsabschnitt (16), der vom hinteren Ende des ersten Abschnitts zum Anlageabschnitt verläuft und mit dem Anlageabschnitt an dessen unterem Ende oder an dessen unterer Hälfte verbunden ist, wobei der Anlageabschnitt federnd nach hinten auslenkbar ist und an seinem oberen Ende mit dem ersten Abschnitt gekoppelt ist, dadurch gekennzeichnet, daß die Verbindung zwischen dem Verbindungsabschnitt (16) und dem Anlageabschnitt (18) durch ein Widerstandsarmes Gelenk (20) gebildet ist und daß das obere Ende des Anlageabschnitts mittels eines federelastischen Elementes (36, 46, 68, 82) mit dem ersten Abschnitt (4) gekoppelt ist, das den Anlageabschnitt elastisch im wesentlichen nach vorne drückt oder zieht.

2. Bügelendstück nach Anspruch 1, dadurch gekennzeichnet, daß der Verbindungsabschnitt (16) bogenförmig gekrümmt ausgebildet ist.

3. Bügelendstück nach Anspruch 2, dadurch gekennzeichnet, daß die Konkav gekrümmte Fläche des Verbindungsabschnitts (16) zum Ohr gewandt ist.

4. Bügelendstück nach einem der Ansprüche 1 bis 3, dadurch gekennzeichnet, daß sich der Verbindungsabschnitt (16) von seinem oberen, mit dem ersten Abschnitt (4) verbundenen Ende ausgehend allmählich verjüngt.

5. Bügelendstück nach einem der Ansprüche 1 bis 4, dadurch gekennzeichnet, daß der erste Abschnitt (4) und der Verbindungsabschnitt (16) einstückig miteinander ausgebildet sind.

6. Bügelendstück nach Anspruch 5, dadurch gekennzeichnet, daß ein den ersten Abschnitt (4) mit dem Verbindungsabschnitt (16) an den Enden dieser Abschnitte verbindender übergangsbereich (14) einen bogenförmigen Verlauf hat.

7. Bügelendstück nach einem der Ansprüche 1 bis 6, dadurch gekennzeichnet, daß der erste Abschnitt (4) und der Verbindungsabschnitt (16) miteinander eine formsteife Einheit bilden.

8. Bügelendstück nach einem der Ansprüche 1 bis 7, dadurch gekennzeichnet, daß der längliche Anlageabschnitt (18) zusätzlich quer zur bogenförmigen Krümmung gekrümmt ist.

9. Bügelendstück nach einem der Ansprüche 1 bis 8, dadurch gekennzeichnet, daß der längliche Anlageabschnitt (18) ein kreisförmiges oder ovales Profil hat.

10. Bügelendstück nach einem der Ansprüche 1 bis 9, dadurch gekennzeichnet, daß der Anlageabschnitt (18) formsteif ausgebildet ist.

11. Bügelendstück nach einem der Ansprüche 1 bis 10, dadurch gekennzeichnet, daß der Verbindungsabschnitt (16) und der Anlageabschnitt (18) im Bereich des Gelenks (20) einstückig aus einem Kunststoff ausgebildet sind und daß das Gelenk durch einen fadenförmigen oder dünnen, streifenförmigen Kunststoffabschnitt (22) aus demselben Kunststoff gebildet ist.

12. Bügelendstück nach Anspruch 11, dadurch gekennzeichnet, daß der streifenförmige Kunststoffabschnitts (22) in seiner Breite im wesentlichen senkrecht zu der durch den ersten Abschnitt (4), den Verbindungsabschnitt (16) und den Anlageabschnitt (18) definierten Ebene verläuft.

13. Bügelendstück nach einem der Ansprüche 1 bis 10, dadurch gekennzeichnet, daß der Verbindungsabschnitt (16) und der Anlageabschnitt (18) getrennt gefertigte Teile sind.

14. Bügelendstück nach Anspruch 13, dadurch gekennzeichnet, daß das Gelenk aus zwei ineinandergreifenden Ösen besteht.

15. Bügelendstück nach Anspruch 13, dadurch gekennzeichnet, daß das Gelenk (20) einen Gelenkstift (60), der am Anlageabschnitt (18) oder am Verbindungsabschnitt (16) fest ist, und ein Gelenkauge (62) aufweist, das am anderen der beiden Abschnitte fest ist und in Eingriff mit dem Gelenkstift steht.

16. Bügelendstück nach Anspruch 15, dadurch gekennzeichnet, daß die Achse des Gelenkstiftes (60) im wesentlichen senkrecht zu der durch den ersten Abschnitt (4), den Verbindungsabschnitt (16) und den Anlageabschnitt (18) definierten Ebene verläuft.

17. Bügelendstück nach Anspruch 13, dadurch gekennzeichnet, daß das Gelenk (20) ein Kugelgelenk mit einer Kugel (64) und einer Kugelpfanne (66) ist.

18. Bügelendstück nach einem der Ansprüche 1 bis 17, dadurch gekennzeichnet, daß am ersten Abschnitt (4) ein Anschlag (30) angeordnet ist, an den der Anlageabschnitt (18) bei seiner Auslenkbewegung nach vorne mit seinem oberen Ende zur Anlage kommt.

19. Bügelendstück nach einem der Ansprüche 1 bis 18, dadurch gekennzeichnet, daß im ersten Abschnitt (4) ein in dessen Längsrichtung verlaufender Hohlraum (34) ausgebildet ist, in dem das federelastische Element (36, 46, 82) angeordnet ist.

20. Bügelendstück nach Anspruch 19, dadurch gekennzeichnet, daß der Hohlraum (34) teilweise durch eine Kappe (24) umschlossen ist, die als Bestandteil des ersten Abschnitts (4) an dessen Körper (26) angesetzt ist.

21. Bügelendstück nach Anspruch 19 oder 20, dadurch gekennzeichnet, daß der Hohlraum (34) im wesentlichen in Verlängerung einer im ersten Abschnitt (4) ausgebildeten Bohrung (8) verläuft, die zur Aufnahme eines Endes eines Bügelschaftes (6) dient.

22. Bügelendstück nach einem der Ansprüche 1 bis 21, dadurch gekennzeichnet, daß das federelastische Element eine Schrauben-Druckfeder (46) ist.

23. Bügelendstück nach einem der Ansprüche 1 bis 21, dadurch gekennzeichnet, daß das federelastische Element eine Schrauben-Zugfeder (36) ist.

24. Bügelendstück nach einem der Ansprüche 1 bis 21, dadurch gekennzeichnet, daß das federelastische Element ein Schaumstoffkörper (82) ist.

25. Bügelendstück nach einem der Ansprüche 1 bis 18, dadurch gekennzeichnet, daß das federelastische Element ein gummielastischer Faden (68) ist, der an seinem einen Ende mit dem Anlageabschnitt (18) und an seinem anderen Ende mit dem ersten Abschnitt (4) verbunden ist.

26. Bügelendstück nach einem der Ansprüche 1 bis 25, dadurch gekennzeichnet, daß der erste Abschnitt (4), der Anlageabschnitt (18) und der Verbindungsabschnitt (16) im wesentlichen aus Kunststoff gefertigt sind.

**Claims**

1. Side-arm endpiece for a side-arm of a spectacles frame, having a first section (4), which is essentially straight and runs in the longitudinal direction of the side-arm, an elongated, curvedly bent bearing section (18), which is intended to bear against the head behind the ear and in the normal wearing attitude runs essentially downwards in relation to the first section, so that the concavely bent surface of the bearing section is facing the ear, and a connecting section (16), which runs from the rear end of the first section to the bearing section and is connected to the bearing section at its lower end or at its lower half, the bearing section being able to be resiliently deflected backwards and being coupled at its top end to the first section, characterised in that the connection between the connecting section (16) and the bearing section (18) is formed by a low-resistance joint (20) and in that the upper end of the bearing section is coupled by means of a spring-elastic element (36, 46, 68, 82) to the first section (4), which elastically pushes or pulls the bearing section essentially forwards.

2. Side-arm endpiece according to Claim 1, characterised in that the connecting section (16) is of curvedly bent configuration.

3. Side-arm endpiece according to Claim 2, characterised in that the concavely bent surface of the connecting section (16) faces towards the ear.

4. Side-arm endpiece according to one of Claims 1 to 3, characterised in that the connecting section (16) gradually tapers, starting from its upper end connected to the first section (4).

5. Side-arm endpiece according to one of Claims 1 to 4, characterised in that the first section (4) and the connecting section (16) are formed together in one piece.

6. Side-arm endpiece according to Claim 5, characterised in that a transition area (14), connecting the first section (4) to the connecting section (16) at the ends of these sections, has a curved course.

7. Side-arm endpiece according to one of Claims 1 to 6, characterised in that the first section (4) and the connecting section (16) together form a dimensionally stable unit.

8. Side-arm endpiece according to one of Claims 1 to 7, characterised in that the elongate bearing section (18) is additionally bent transversely to the curved bend.

9. Side-arm endpiece according to one of Claims 1 to 8, characterised in that the elongate bearing section (18) has a circular or oval profile.

10. Side-arm endpiece according to one of Claims 1 to 9, characterised in that the bearing section (18) is of dimensionally stable configuration.

11. Side-arm endpiece according to one of Claims 1 to 10, characterised in that the connecting section (16) and the bearing section (18) in the area of the joint (20) are formed in one piece from a plastic material and in that the joint is formed by a thread-shaped or thin, strip-shaped plastic section (22) made from the same plastic material.

12. Side-arm endpiece according to Claim 11, characterised in that the strip-shaped plastic section (22), in terms of its width, runs essentially perpendicular to the plane defined by the first section (4), the connecting section (16) and the bearing section (18).

13. Side-arm endpiece according to one of Claims 1 to 10, characterised in that the connecting section (16) and the bearing section (18) are separately produced parts.

14. Side-arm endpiece according to Claim 13, characterised in that the joint comprises two interlocking eyelets.

**15.** Side-arm endpiece according to Claim 13, characterised in that the joint (20) exhibits a joint pin (60), which is fixed on the bearing section (18) or on the connecting section (16), and a joint eye (62), which is fixed on the other of the two sections and engages with the joint pin.

**16.** Side-arm endpiece according to Claim 15, characterised in that the axis of the joint pin (60) runs essentially perpendicular to the plane defined by the first section (4), the connecting section (16) and the bearing section (18).

**17.** Side-arm endpiece according to Claim 13, characterised in that the joint (20) is a ball-and-socket joint having a ball (64) and a ball socket (66).

**18.** Side-arm endpiece according to one of Claims 1 to 17, characterised in that on the first section (4) there is disposed a stop (30), against which the bearing section (18), in the event of its forward deflection movement, comes to bear by virtue of its upper end.

**19.** Side-arm endpiece according to one of Claims 1 to 18, characterised in that in the first section (4) there is formed, running in its longitudinal direction, a cavity (34), in which the spring-elastic element (36, 46, 82) is disposed.

**20.** Side-arm endpiece according to Claim 19, characterised in that the cavity (34) is partially enclosed by a cap (24) which, as a component part of the first section (4), is attached to the latter's body (26).

**21.** Side-arm endpiece according to Claim 19 or 20, characterised in that the cavity (34) runs essentially as an extension of a bore (8) formed in the first section (4), which bore serves to receive one end of a side-arm shaft (6).

**22.** Side-arm endpiece according to one of Claims 1 to 21, characterised in that the spring-elastic element is a screw compression spring (46).

**23.** Side-arm endpiece according to one of Claims 1 to 21, characterised in that the spring-elastic element is a screw tension spring (36).

**24.** Side-arm endpiece according to one of Claims 1 to 21, characterised in that the spring-elastic element is a foam member (82).

**25.** Side-arm endpiece according to one of Claims 1 to 18, characterised in that the spring-elastic element is a rubber-elastic thread (68), which is connected at its one end to the bearing section (18) and at its other end to the first section (4).

**26.** Side-arm endpiece according to one of Claims 1 to 25, characterised in that the first section (4), the bearing section (18) and the connecting section (16) are made essentially from plastic.

**Revendications**

**1.** Extrémité de branche pour une branche de monture de lunettes comportant une première section (4) sensiblement rectiligne et dirigée dans la direction longitudinale de la branche, une section de contact allongée (18) incurvée en arc qui est destinée au contact avec la tête derrière l'oreille et est, dans la position de port normale, dirigée sensiblement vers le bas par rapport à la première section, de sorte que la surface de courbure concave de la section de contact est située du côté de l'oreille, et une section de liaison (16) qui s'étend de l'extrémité postérieure de la première section à la section de contact et est reliée à la section de contact à son extrémité inférieure ou à sa moitié inférieure, la section de contact pouvant être écartée êlastiquement vers l'arrière et étant accouplée à la première section à son extrémité supérieure, caractérisée en ce que la liaison entre la section de liaison (16) et la section de contact (18) est constituée par une articulation (20) peu résistance et en ce que l'extrémité supérieure de la section de contact est accouplée à la première section (4) au moyen d'un élément élastique faisant ressort (36, 46, 68, 82) qui exerce une poussée ou une traction élastique essentiellement vers l'avant de la section de contact.

**2.** Extrémité de branche selon la revendication 1, caractérisée en ce que la section de liaison (16) a une conformation incurvée en arc.

**3.** Extrémité de branche selon la revendication 2, caractérisée en ce que la surface de courbure concave de la section de liaison (16) est située du côté de l'oreille.

**4.** Extrémité de branche selon l'une des revendications 1 à 3, caractérisée en ce que la section de liaison (16) s'amincit progressivement à partir de son extrémité supérieure reliée à la première section (4).

**5.** Extrémité de branche selon l'une des revendications 1 à 4, caractérisée en ce que la première section (4) et la section (16) sont réalisées d'un seul tenant.

**6.** Extrémité de branche selon la revendication 5, caractérisée en ce qu'une zone de raccordement (14) reliant la première section (4) à la section de liaison (16) aux extrémités de ces sections a une allure arquée.

**7.** Extrémité de branche selon l'une des revendications 1 à 6, caractérisée en ce que la première section (4) et la section de liaison (16) forment un seul bloc indéformable.

**8.** Extrémité de branche selon l'une des revendications 1 à 7, caractérisée en ce que la section de contact allongée (18) est en plus incurvée transversalement par rapport à la courbure arquée.

**9.** Extrémité de branche selon l'une des revendications 1 à 8, caractérisée en ce que la section de contact allongée (18) a un profil circulaire ou ovale.

**10.** Extrémité de branche selon l'une des revendications 1 à 9, caractérisée en ce que la section de contact (18) est indéformable.

**11.** Extrémité de branche selon l'une des revendications 1 à 10, caractérisée en ce que la section de liaison (16) et la section de contact (18) sont réalisées d'un seul tenant en une matière plastique dans la zone de l'articulation (20), et en ce que l'articulation est formée par une section en matière plastique (22) constituée par la même matière plastique en forme de fil ou en forme de bande mince.

**12.** Extrémité de branche selon la revendication 11, caractérisée en ce que la section en matière plastique en forme de bande (22) est sur sa largeur sensiblement perpendiculaire au plan défini par la première section (4), la section de liaison (16) et la section de contact (18).

**13.** Extrémité de branche selon l'une des revendications 1 à 10, caractérisée en ce que la section de liaison (16) et la section de contact (18) sont des pièces fabriquées séparément.

**14.** Extrémité de branche selon la revendication 13, caractérisée en ce que l'articulation est formée par deux anneaux accouplés.

**15.** Extrémité de branche selon la revendication 13, caractérisée en ce que l'articulation (20) comporte une cheville d'articulation (60) qui est fixée à la section de contact (18) ou à la section de liaison (16), et un anneau d'articulation (62) qui est fixé à l'autre des deux sections et est accouplée avec la cheville d'articulation.

**16.** Extrémité de branche selon la revendication 15, caractérisée en ce que l'axe de la cheville d'articulation (60) est sensiblement perpendiculaire au plan défini par la première section (4), la section de liaison (16) et la section de contact (18).

**17.** Extrémité de branche selon la revendication 13, caractérisée en ce que l'articulation (20) est une articulation sphérique comportant une rotule (64) et une cuvette (66).

**18.** Extrémité de branche selon l'une des revendications 1 à 17, caractérisée en ce qu'une butée (30) est placée sur la première section (4), butée avec laquelle la section de contact (18) entre en contact par son extrémité supérieure lors de son mouvement d'écartement vers l'avant.

**19.** Extrémité de branche selon l'une des revendications 1 à 18, caractérisée en ce qu'il est formé dans la première section (4) une cavité (34) dirigée dans la direction de sa longueur, dans laquelle est placé l'élément élastique (36, 46, 82).

**20.** Extrémité de branche selon la revendication 19, caractérisée en ce que la cavité (34) est embrassée en partie par un cache (24) qui, en tant que composant de la première section (4), est placé sur son corps (26).

**21.** Extrémité de branche selon la revendication 19 ou 20, caractérisée en ce que la cavité (34) s'étend sensiblement dans le prolongement d'un alésage (8) formé dans la première section (4) qui sert à recevoir une extrémité d'une tige de branche (6).

**22.** Extrémité de branche selon l'une des revendications 1 à 21, caractérisée en ce que l'élément élastique est un ressort de compression hélicoïdal (46).

**23.** Extrémité de branche selon l'une des revendications 1 à 21, caractérisée en ce que l'élément élastique est un ressort de traction hélicoïdal (36).

**24.** Extrémité de branche selon l'une des revendications 1 à 21, caractérisée en ce que l'élément élastique est un corps en mousse (82).

**25.** Extrémité selon l'une des revendications 1 à 18, caractérisée en ce que l'élément élastique est un fil (68) en caoutchouc élastique qui est relié à l'une de ses extrémités à la section de contact (18) et, à son autre extrémité, à la première section (4).

**26.** Extrémité de branche selon l'une des revendications 1 à 25, caractérisée en ce que la première section (4), la section de contact (18) et la section de liaison (16) sont essentiellement en matière plastique.

Fig.1

Fig.2

Fig.3

Fig.4

Fig.5

Fig.6

Fig.7

Fig. 8

Fig. 11

Fig. 10

Fig. 9

Fig. 12